(19) Europäisches Patentamt
European Patent Office
Office européen des brevets

(11) **EP 3 984 688 A1**

(12) **EUROPÄISCHE PATENTANMELDUNG**

(43) Veröffentlichungstag:
    **20.04.2022 Patentblatt 2022/16**

(21) Anmeldenummer: **20202245.5**

(22) Anmeldetag: **16.10.2020**

(51) Internationale Patentklassifikation (IPC):
    **B23K 26/062** *(2014.01)*   **B23K 26/38** *(2014.01)*
    **B23K 26/70** *(2014.01)*   **B23K 101/04** *(2006.01)*
    **B23K 101/18** *(2006.01)*

(52) Gemeinsame Patentklassifikation (CPC):
    **B23K 26/38; B23K 26/062; B23K 26/702;**
    B23K 2101/04; B23K 2101/18

(84) Benannte Vertragsstaaten:
    **AL AT BE BG CH CY CZ DE DK EE ES FI FR GB GR HR HU IE IS IT LI LT LU LV MC MK MT NL NO PL PT RO RS SE SI SK SM TR**
    Benannte Erstreckungsstaaten:
    **BA ME**
    Benannte Validierungsstaaten:
    **KH MA MD TN**

(71) Anmelder: **Bystronic Laser AG**
    **3362 Niederönz (CH)**

(72) Erfinder:
    • **HELD, Michael**
      **3412 Heimiswil (CH)**
    • **HAAS, Titus**
      **4800 Zofingen (CH)**
    • **BORER, Daniel**
      **4704 Niederbipp (CH)**
    • **INGOLD, Elio**
      **3362 Niederönz (CH)**

(74) Vertreter: **Schwarz und Baldus Patentanwälte**
    **Hermann-Schmid-Straße 10**
    **80336 München (DE)**

(54) **VERFAHREN, COMPUTERPROGRAMM UND LASERSCHNEIDSYSTEM FÜR INTELLIGENTES ECKENSCHNEIDEN**

(57)   In einem Aspekt betrifft die vorliegende Erfindung eine Recheneinheit (RE) zur Ausführung eines Umrechnungsalgorithmus, mit einer Schnittstelle (UI) zum Erfassen von einem ersten Schneidparameterdatensatz ; und mit einem Prozessor (P), der dazu ausgebildet ist, ein Bewegungsprofilobjekt (bpo) zu extrahieren und der weiterhin ausgebildet ist, einen Umrechnungsalgorithmus auszuführen, der in einem Speicher der elektronischen Recheneinheit (RE) ladbar und/oder ausführbar gespeichert ist, um aus dem erfassten ersten Schneidparameterdatensatz den zweiten Schneidparameterdatensatz (2SP) zu berechnen und bereitzustellen, wobei der zweite Schneidparameterdatensatz (2SP) in Abhängigkeit von dem extrahierten Bewegungsprofilobjekt (bpo) berechnet wird.

FIG. 1

EP 3 984 688 A1

## Beschreibung

Die vorliegende Erfindung liegt auf dem Gebiet der Laserschneidtechnologie und betrifft insbesondere ein Verfahren zur Berechnung von Schneidparametern zur Steuerung und/oder Regelung eines Laserschneidprozesses einer Laserschneidmaschine während des Laserschneidens von zu schneidenden Teilen.

Ein Lasersystem, insbesondere zum Schneiden von Metallblechen und/oder -röhren und mit Leistungen in der Regel von 2 kW oder mehr ist ein hochkomplexes System und umfasst mehrere physikalische Bauteile und Komponenten, die über entsprechende Steuerbefehle elektronisch angesteuert werden, wie beispielsweise Steuerbefehle zu Düsenabstand, Fokuslage, Gasdruck für das jeweilige zu schneidende Teil bzw. Werkstück mit spezifischen Eigenschaften (Materialart, Dicke etc.). Derartige Lasersysteme können Laserschneidmaschinen mit niedriger, mittlerer aber auch solche mit hoher Dynamik sein. Im Rahmen des Schneidprozesses müssen somit eine Reihe von Sollwerten ermittelt werden, um den Schneidprozess in gewünschter Qualität ausführen zu können. Diese Sollwerte werden an die Steuerung auf der Lasermaschine zur Ansteuerung der entsprechenden Module und/oder Aktoren übermittelt. Die Bestimmung der korrekten Schneidparameter ist einerseits für die Qualität und andererseits für die Performance und für den Ressourcenverbrauch (z.B. von Schneidgas) von hoher Bedeutung. Andererseits ist es auch wünschenswert, dass die Schneidparameter für sowohl für Laserschneidmaschinen mit hoher als auch für solche mit mittlerer oder niedriger Dynamik funktionieren. Die Bestimmung der Sollwerte ist allerdings eine komplexe Aufgabe, da diese mitunter auch davon abhängig sind, mit welcher Geschwindigkeit und/oder mit welcher Beschleunigung der Laserkopf auf der Trajektorie bewegt wird.

Bei heute im Einsatz befindlichen Lasermaschinen ist es bekannt, bei Anschnitt/Endschnitt und in Ecken und Radien die Laserleistung in Abhängigkeit von der aktuellen Geschwindigkeit anzupassen. Die Schneidqualität wird aber nicht nur von der richtig dosierten Laserleistung, sondern durchaus - und teilweise auch maßbeglich - von anderen dynamischen Schneidparametern (wie z.B. der Fokuslage) beeinflusst, die bislang allerdings nicht geschwindigkeitsabhängig korrigiert bzw. angepasst werden, was mitunter zur Qualitätseinbußen führen kann.

Schneidparameter können in zwei Kategorien eingeteilt werden, den statischen und dynamischen Schneidparametern. Statische Schneidparameter können während dem Schneiden nicht verändert werden: Magnifikation, Düsenart, Düsendurchmesser etc. Dynamische Schneidparameter können während dem Schnitt, unter Einhaltung der dynamischen Limits, verändert werden. Zu den dynamischen Schneidparametern zählen mitunter: Fokuslage, Gasdruck, Laserleistung, Pulsbreite, Pulsfrequenz und Düsenabstand und natürlich der Vorschub (maximale Schnittgeschwindigkeit) sowie die Sollgeschwindigkeit (abhängig von der Maschinen-/Achsdynamik). Der Vorschub definiert die maximale Schnittgeschwindigkeit, welche ggf. bei Geradeausschneiden erreicht werden kann. Die Sollgeschwindigkeit wird als Zielgeschwindigkeit in Abhängigkeit von der Geometrie (z.B. Krümmung) berechnet. Ein Schnitt startet üblicherweise bei Geschwindigkeit "v = 0" und wird von Null auf den Vorschub beschleunigt, falls möglich - abhängig von Krümmung/Radien. Mit anderen Worten unterschreitet die Sollgeschwindigkeit z.B. bei Radien den Vorschub.

Wie oben erläutert, wird die Qualität, insbesondere die Grathöhe, des geschnittenen Teils stark durch die angewendeten Schneidparameter bestimmt. Aus der Erfahrung ist bekannt, dass eine höhere Qualität erzielt werden kann, wenn die dynamischen Schneidparameter für Geradeaus-Schnitte anders gewählt werden als für Schnitte in Ecken/Radien. Die bis heute verwendete Architektur der Maschine erlaubte kaum eine Anpassung der dynamischen Schneidparameter (Fokuslage, Gasdruck, ...). Deshalb sind die heute verwendeten Schneidparameter eine Kompromisseinstellung zwischen den beiden Optima von Geradeausschnitt und Ecken/Radien. Daraus ergeben sich folgenden Nachteile:

1) Bei Geradeausschnitten wären höhere Vorschübe realisierbar, wenn die anderen dynamischen Schneidparameter bei Ecken und Radien geschwindigkeitsabhängig angepasst werden könnten.
2) Die Qualität ist entweder im Geradeausschnitt und/oder bei Ecken/Radien unbefriedigend.
3) Das Schneidgasvolumen wird zur Bekämpfung von unbefriedigenden Ecken/Radien über die ganze Kontur erhöht. Dies führt zu einem höheren Schneidgasverbrauch.

Im Stand der Technik, z.B. in der EP2883647 B1, sind Verfahren bekannt, um die Einstellung der Schneidparameter zu verbessern und insbesondere einen ersten Schneidparameter bei Änderung eines zweiten Schneidparameters anzupassen oder nachzusteuern. Dieses Verfahren können jedoch noch weiter verbessert werden. Wünschenswert ist es insbesondere, wenn die Geometrie des zu schneidenden Teils bei der Bestimmung der Schneidparameter auf dynamische Weise berücksichtigt werden kann.

Um die Qualität, die Effektivität (Performance) und den Ressourcenbedarf (z.B. Schneidgasverbrauch) des Laserschneidprozesses im Anwendungsbereich Schneiden von Metallblechen und -röhren zu verbessern, besteht ein Bedarf nach einer Lösung, um eine Menge von Schneidparametern, insbesondere die dynamischen Schneidparameter, an die unterschiedlichen Geschwindigkeiten und/oder Beschleunigungen, mit denen Abschnitte einer Schneidkontur abgefahren werden, und an die unterschiedlichen Konturverläufe (Krümmungen) anpassen zu können. Muss z.B. der Prozessvorschub reduziert werden, weil die Bahn, an Stellen mit hoher Krümmung oder in Ecken, nicht genügend schnell abgefahren werden kann, so sollen sich die dynamischen Schneidparameter entsprechend automatisch anpassen.

Die vorliegende Erfindung hat sich deshalb zur Aufgabe gestellt, die Qualität des Laserschneidvorganges zu verbessern und dabei eine möglichst hohe Produktivität zu gewährleisten. Zudem soll der Bedarf an Schneidgas gesenkt werden. Insbesondere sollen die Ecken oder Abschnitte mit kleinen Radien neben der Laserleistung mit anderen dynamischen Prozesswerten bearbeitet werden als z.B. Geradeausschnitte.

In einem ersten Aspekt betrifft die Erfindung ein (computer-implementiertes) Verfahren zur Berechnung eines zweiten Schneidparameterdatensatzes zur Steuerung und/oder Regelung eines Laserschneidprozesses einer Laserschneidmaschine während des Laserschneidens von (Bau-) Teilen oder Werkstücken, insbesondere plattenförmigen Metallblechen, aus denen - gemäß Schneidplan - die Teile ausgeschnitten werden, mit folgenden Verfahrensschritten, die auf einer elektronische Recheneinheit ausgeführt werden:

- Erfassen eines ersten Schneidparameterdatensatzes;
- Extrahieren eines Bewegungsprofilobjektes;
- Ausführen eines Umrechnungsalgorithmus, der in einem Speicher der elektronischen Recheneinheit ladbar und/oder ausführbar gespeichert ist, um aus dem erfassten ersten Schneidparameterdatensatz den zweiten Schneidparameterdatensatz zu berechnen und bereitzustellen, wobei der zweite Schneidparameterdatensatz in Abhängigkeit von dem extrahierten Bewegungsprofilobjekt berechnet wird. Vorzugsweise kann der berechnete zweite Schneidparameterdatensatz direkt auf der Laserschneidmaschine zur Ausführung gebracht werden, z.B. zur geschwindigkeitsabhängigen Fokuslageänderung.

Das Laserschneiden betrifft insbesondere das Schneiden von Metallblechen oder -röhren mit einem Laser mit einer Leistung von 2 kW oder mehr.

Der Begriff "Bewegungsprofilobjekt" soll als elektronisches Objekt, z.B. als eine Datei oder Speicherelement (zur Speicherung z.B. in einer Datenbank) verstanden werden, in dem Daten in Bezug auf die von einem Laserschneidkopf auszuführende Bewegung und/oder Daten in Bezug auf die zu schneidende Geometrie, insbesondere Daten zur Krümmung und/oder Radien der zu schneidenden Kontur, gespeichert sind. Das Bewegungsprofilobjekt kann aus einer Steuerung (z.B. CNC) eingelesen werden. Das Bewegungsprofilobjekt indiziert insbesondere Krümmungsdaten und/oder Daten zu etwaigen Radien, die geschnitten werden sollen, die z.B. aus dem Schneidplan extrahiert werden können. Die in dem Bewegungsprofilobjekt gespeicherten oder verwendeten Daten können Bestandteil des ersten Schneidparameterdatensatzes sein und/oder aus diesem berechnet werden. Alternativ oder kumulativ können die in dem Bewegungsprofilobjekt gespeicherten Daten aus einem Schneidplan berechnet werden. Das Bewegungsprofilobjekt kann absolute Angaben zur Bewegung und/oder Geometrie oder entsprechende Verlaufsangaben über die Zeit (z.B. als Bewegungsprofil) umfassen. In einer einfachen Ausführungsform kann das Bewegungsprofilobjekt somit auch nur einen Absolutwert einer Bewegungsgröße repräsentieren, wie z.B. einen Beschleunigungswert (als Sollvorgabe oder Einstellwert und somit in absoluter Form), einen Geschwindigkeitswert, einen Krümmungswert, der die Krümmung der Geometrie/Trajektorie indiziert. Die Krümmung kann aus dem Schneidplan berechnet werden und/oder von einer Steuerung vorgegeben werden. Die Krümmung ist durch die parametrischen Ableitungen der Kurve/Geometrie gegeben:

$$\kappa = \frac{|\underline{r}' \times \underline{r}''|}{|\underline{r}'|^3}$$

,

wobei "r" der Radius und "r'" die erste parametrische und "r''" die zweite parametrische Ableitung der Kurve ist. Der technische Vorteil, der entsteht durch die Berechnung, mittels des Umrechnungsalgorithmus, basierend auf dem Bewegungsprofilobjekt, ist, dass wählbare dynamische Schneidparameter auf Basis von wählbaren Bewegungs- oder Geometriedaten berechnet werden. Der Benutzer hat somit in einer Konfigurationsphase die Möglichkeit, hier seine Vorgaben für den jeweiligen Anwendungsfall zu tätigen. In einem ersten Fall kann also die Fokuslage in Abhängigkeit von der Schnittgeschwindigkeit angepasst werden und in einem zweiten Fall kann der Gasdruck oder ein anderer dynamischer Schneidparameter in Abhängigkeit von der Beschleunigung angepasst werden. Damit kann die Flexibilität des Anpassungsverfahrens verbessert werden.

In einer weiteren Ausführungsform der Erfindung umfasst das Bewegungsprofilobjekt einen Verlauf der Geschwindigkeit, Beschleunigung und/oder Ruck und/oder Krümmung über die Zeit. Grundsätzlich ist der Umrechnungsalgorithmus nicht nur auf geschwindigkeitsabhängige Änderungen der Sollwerte beschränkt, sondern kann auch von Beschleunigungswerten, Krümmungsverläufen der Schneidbahn und/oder anderen Größen abhängig gemacht werden.

Der erste und zweite Schneidparameterdatensatz kennzeichnet sich durch eine Menge von vorkonfigurierbaren dynamischen Schneidparametern. Dies hat den technischen Vorteil, dass nicht nur die Laserleistung an die Geschwindigkeit angepasst werden kann, sondern auch andere dynamische Schneidparameter, um eine bessere Qualität auch bei unterschiedlichen Konturanforderungen bereitstellen zu können. Vorzugsweise können mehrere Schneidparameter korrigiert bzw. angepasst werden (deshalb der Begriff Schneidparameterdatensatz, um deutlich zu machen, dass es sich um eine Menge von unterschiedlichen Parametern handelt und nicht nur um einen (wie bisher: Laserleistung)). In einer vorteilhaften Ausführungsform der Erfindung kann der erste und/oder zweite Schneidparameterdatensatz deshalb eine Menge von dynamischen Schneidparametern umfassen, nämlich insbesondere Fokuslage, Pulsschema (Pulsbreite, Pulsfrequenz), Düsenabstand, Gasdruck, Laserleistung, Beam Parameter Product / BPP und/oder Fokusdurchmesser. Natürlich zählt die Schnittgeschwindigkeit auch zu den dynamischen Schneidparametern, die je nach zu schneidender Geometrie von einer Steuerung bereits geometrieangepasst ermittelt wurde, so dass Geradeaus-Schnitte schneller und z.B. fein granulare Konturen, wie z.B. kleine Winkel und Radien, langsamer gefahren werden. In diesen Bereichen werden die oben genannten, anderen Schneidparameter erfindungsgemäß auch automatisch angepasst.

Die Recheneinheit ist ein elektronisches Modul zur Datenverarbeitung. Die elektronische Recheneinheit kann als monolithische Einheit zur Ausführung des Erfassens des ersten Schneidparameterdatensatzes, zum Extrahieren des Bewegungsprofilobjektes und zum Ausführen des Umrechnungsalgorithmus ausgebildet sein. Alternativ kann die Recheneinheit auch verteilt auf unterschiedlichen computer-basierten Entitäten ausgebildet sein. Dies hat den Vorteil, dass ein erster Teil der vorstehend genannten Schritte auf einer ersten Einheit und ein zweiter Teil auf einer zweiten Einheit ausgeführt werden kann und damit das Verfahren modularer ausgebildet werden kann. Insbesondere kann z.B. eine erste Steuerung (z.B. CNC Kernel) ausgebildet werden, in dem für den Kunden frei verfügbare Funktionen (z.B. zur Berechnung des ersten Schneidparameterdatensatzes, vorzugsweise zur Berechnung der Antriebsgeschwindigkeit der Achsenantriebe zur Bewegung des Laserschneidkopfes) ausgeführt werden und eine zweite Steuerung (z.B. PLC, programmable logic control Einheit), in der z.B. der Umrechnungsalgorithmus unter Zugriff auf die Funktionen des Funktionskatalogs ausgeführt werden, die vorwiegend proprietär vorgehalten werden sollen, da diese mit relativ hohen Entwicklungskosten verbunden sind. Vorteilhafterweise könnten die Funktionen des Funktionskatalogs auch nach Auslieferung des Produktes weiterentwickelt und einem Update Vorgang unterzogen werden. In dieser Ausführung werden in der zweiten Steuerung, z.B. PLC, Prozesslogikanteile mittels des Umrechnungsalgorithmus unter Zugriff auf den Funktionskatalog ausgeführt, wie die Berechnung des angepassten Gasdrucks und/oder der Fokuslage in Abhängigkeit von der Geschwindigkeit, Beschleunigung und/oder Krümmung. Alternativ oder kumulativ können auch beide Steuerungen in einer Einheit vorgehalten werden. Alternativ oder kumulativ können zweit getrennte, separate Speicher ausgebildet sein. In dem ersten Speicher werden die Softwareanteile zur Berechnung des ersten Sollwertdatensatzes und in dem zweiten Speicher können die Softwareanteile zur Berechnung der Korrekturwerte (zweiter Sollwertdatensatz) gespeichert sein. In dem zweiten Speicher können die Funktionen des Funktionskatalogs und/oder die Parameter zur Parametrierung der Funktionen gespeichert sein. Die optimierten Schneidparameter, also die Parameter des zweiten Schneidparameterdatensatzes können auch offline berechnet werden. Das Ergebnis dieser Berechnung (z.B. auf einer externen Instanz) kann in einem sog. M-Befehl repräsentiert sein und z.B. in den NC-Code geschrieben werden, um diesen dann auf der Lasermaschine auszuführen bzw. abzuarbeiten. D.h. die Geschwindigkeit wird wieder durch die CNC Steuerung berechnet, und die optimalen Schneidparameter, welche als M-Befehle im NC-Code hinterlegt sind, werden der PLC Steuerung übergeben. In diesem Ausführungsform sind somit zwei unterschiedliche Steuerungen ausgebildet, die auf unterschiedlichen Instanzen ausgebildet sein können (lokal und extern der Lasermaschine) und mit unterschiedlichen Steuer- und Berechnungsaufgaben betraut sind. Damit kann das Know-How für die Berechnungen sehr variable auf die beteiligten Entitäten verteilt werden.

Der Umrechnungsalgorithmus ist ein computer-implementiertes Verfahren, das einen ersten Satz von Schneidparametern, der z.B. von einer Steuerung (z.B. CNC) eingelesen werden kann, in den zweiten Satz von Schneidparametern umrechnet und dabei Geometriedaten (Krümmung, Radien) der abzufahrenden Geometrie berücksichtigt. Dazu werden Transformationsvorschriften angewendet, die auf einem Funktionskatalog basieren, der in einem externen oder internen Speicher vorgehalten werden kann. Ersteres hat den Vorteil, dass der Funktionskatalog auch während der Ausführung des Verfahrens noch verändert werden kann, insbesondere parametriert werden kann. So können bestimmte Konstanten in den Formeln eingestellt werden, die dann zur Umrechnung verwendet werden. Der Umrechnungsalgorithmus berücksichtigt bei der Berechnung des Ergebnisses in Form des zweiten Schneidparameterdatensatzes die Daten des Bewegungsprofilobjektes. Im Bewegungsprofilobjekt sind die Geometriedaten (insbesondere Krümmung, Radien) abgelegt.

Der Funktionskatalog kann folgende Umrechnungen des ersten Schneidparametersatzes in den zweiten Schneidparametersatz vornehmen oder eine Teilmenge daraus:

$$x = \begin{bmatrix} v_c, F, A, \kappa, D, z_0, p_H, P_L, z_N, P_W, P_F, BPP, \\ \Delta_{z_0}^{v_c}, \Delta_{p_H}^{v_c}, \Delta_{P_L}^{v_c}, \Delta_{P_W}^{v_c}, \Delta_{P_F}^{v_c}, \Delta_{z_0}^{A}, \Delta_{p_H}^{A}, \Delta_{P_L}^{A}, \Delta_{P_W}^{A}, \Delta_{P_F}^{A}, \Delta_{z_0}^{\kappa}, \Delta_{p_H}^{\kappa}, \Delta_{P_L}^{\kappa}, \Delta_{P_W}^{\kappa}, \Delta_{P_F}^{\kappa} \end{bmatrix}$$

mit:

$v_c$: Sollgeschwindigkeit (commanded speed)
$F$: Vorschub (feed rate)
$A$: Beschleunigung (acceleration)
K: Curvature, Kurvenhaftigkeit der zu schneidenden Kontur
D: Materialdicke
$z_0$: Fokuslage
$p_H$: Gasdruck
$P_L$: Laserleistung
$z_N$: Düsenabstand (Nozzle distance)
$P_W$: Pulsbreite (Pulse width of laser)
$P_F$: Pulsfrequenz (Pulse frequency of laser)
BPP: Strahlparameterprodukt (Beam Parameter Product).

Der Umrechnungsalgorithmus basiert demnach auf zwei Ausprägungen der Geschwindigkeit: dem Vorschub und der Sollgeschwindigkeit.

Der Vorschub (feed rate) bezeichnet die maximal erreichbare Geschwindigkeit, mit der der Laserschneidkopf bewegt werden kann. Der Vorschub ist primär materialabhängig (insbesondere von der Dicke und/oder vom Typ des zu schneidenden Materials) und weiterhin abhängig von den eingebauten Motoren und Antrieben und mechanischen Komponenten der Laseranlage. Der Vorschub wird üblicherweise vom Benutzer über ein Feld auf einem User Interface eingegeben oder in automatisch algorithmisch (z.B. modell-basiert) berechnet. Der Vorschub kann auch von einer Steuereinheit vorgegeben werden.

Die Sollgeschwindigkeit ist im Unterschied zum Vorschub geometrieabhängig. Die Sollgeschwindigkeit kann z.B. von einer CNC Steuerung berechnet werden. Die Sollgeschwindigkeit ist per definitionem kleiner oder gleich dem Vorschub. Der Sollgeschwindigkeitswert wird vor allem bei Krümmungen oder Winkeln den Vorschubwert unterschreiten. Bei Unterschreiten bzw. im letzteren Fall sollen die dynamischen Sollwerte des ersten Sollwertdatensatzes korrigiert werden. Die Erfindung ist jedoch nicht auf eine geschwindigkeitsabhängige Sollwertkorrektur beschränkt, denn diese können auch in Abhängigkeit von der Beschleunigung, vom Ruck und/oder von der Trajektorie/Geometrie korrigiert werden.

Der Output der jeweiligen Funktion zur Berechnung des zweiten Schneidparameterdatensatzes ist:

$$u^* = [z_0^*, p_H^*, P_L^*, P_W^*, P_F^*, z_N^*]$$

wobei:

die mit * gekennzeichneten Größen, die bewegungsprofilobjekt-angepasste Fokuslage, Laserleistung, Gasdruck, Pulsbreite, Pulsfrequenz und Düsenabstand ist. Also können erfindungsgemäß bezüglich der Eckenqualität und der Schneidgeometrie optimierte Schneidparameter berechnet werden:

- $z_0^*$: optimierte Fokuslage

- $p_H^*$: optimierter Gasdruck

- $P_L^*$: optimierte Laserleistung

- $P_W^*$: optimierte Pulsbreite Arbeitslaser

- $P_F^*$: optimierte Pulsfrequenz Arbeitslaser

- $z_N^*$: optimierter Düsenabstand.

Für jeden Output gibt es eine eigene Funktion, welche von den Inputs x abhängig ist

- $z_0^* = f^{Z0}(x)$: optimierte Fokuslage

- $p_H^* = f^{pH}(x)$: optimierter Gasdruck

- $P_L^* = f^{pP_L}(x)$: optimierte Laserleistung

- $P_W^* = f^{P_W}(x)$: optimierte Pulsbreite Arbeitslaser

- $P_F^* = f^{P_F}(x)$: optimierte Pulsfrequenz Arbeitslaser

- $z_N^* = f^{zN}(x)$: : optimierter Düsenabstand.

Die Funktionen können linear oder trigonometrisch sein. Beispielsweise ergibt sich für die geschwindigkeitsabhängige Fokuslage mit Sinusfunktion als Basis und Exponent $\varepsilon_{z0} = 2$:

$$f^{z0}(x) = \Delta_{z_0}^{v_c} \sin\left(\frac{F-v_c}{F} 2\pi\right)^2 (v_c \leq F) \rightarrow z_0^* = z_0 + f^{z0}(x).$$

Beispielsweise ergibt sich für linear von der Beschleunigung abhängige Fokuslagen:

$$f^{z0}(x) = \Delta_{z_0}^{A}((A_{max} - A_{min}) - \|A\|)(0 \leq \|A\|)(\|A\| \leq A_{max})(A_{min} \leq \|A\|) +$$

$$\Delta_{z_0}^{A}(A_{max} \leq \|A\|)(A_{min} \leq \|A\|) \quad \rightarrow z_0^* = z_0 + f^{z0}(x),$$

wobei $A_{max}$: Beschleunigung, bis zu welcher die Änderungen angewendet werden sollen. Höhere Beschleunigungen führen zu keiner zusätzlichen Änderung. $A_{min}$: Beschleunigung, ab welcher die Änderungen angewendet werden sollen. Geringere Beschleunigungen führen zu keiner zusätzlichen Änderung.

Die Anpassung bzw. Korrektur der dynamischen Sollwerte, hier z.B. der Fokuslage, kann auch in Abhängigkeit von der Beschleunigung erfolgen. Beispielsweise für die beschleunigungsabhängige Fokuslage mit Sinusfunktion als Basis und Exponent $\varepsilon_{z0} = 4$:

$$f^{z0}(x) = \Delta_{z_0}^{A}\left(1 - \frac{sin(A_{max} - \|A\|)^4}{(A_{max} - A_{min})} \frac{\pi}{2}\right)(0 \leq \|A\|)(\|A\| \leq A_{max})(A_{min} \leq \|A\|) +$$

$$\Delta_{z_0}^{A}(A_{max} \leq \|A\|)(A_{min} \leq \|A\|) \quad \rightarrow z_0^* = z_0 + f^{z0}(x).$$

Mit dem hier vorgestellten Verfahren können wichtige Vorteile erreicht werden. So kann die Qualität der geschnittenen Teile erhöht werden und dies insbesondere unter Berücksichtigung der aktuellen Prozessbedingungen (Maschine/Geometrie).

In einer bevorzugten Ausführungsform der Erfindung kann das Verfahren weiterhin umfassen:

- Erfassen einer Materialeigenschaft des zu schneidenden Bauteils, insbesondere einer Blechdicke und/oder einer Materialart;
- wobei der Umrechnungsalgorithmus zur Berechnung des zweiten Schneidparameterdatensatzes die erfasste Materialeigenschaft, insbesondere die Blechdicke und/oder die Materialart berücksichtigt.

Die Materialart kennzeichnet den Materialtyp, wie z.B. Baustahl, Aluminium etc. Die Blechdicke hat einen Einfluss auf die maximale Änderung der Schneidparameter. Beispielsweise ist die maximale Fokuslagenänderung für Stahl bei der Geschwindigkeit v=0 mittels Blechdicke D definiert:

$$\Delta_{z_0}^{v_c} = 0.75 * D.$$

Wird 3mm Stahl geschnitten, so ist die maximale Änderung (bei Geschwindigkeit 0) 2.25mm. Ebenso können in einer Konfigurationsphase andere Zusammenhänge mit z.B. einer anderen Konstante definiert werden; demnach kann die Formel lauten:

$$\Delta_{z_0}^{v_c} = \alpha_{z0} * D.$$

Dann ist die maximale Schneidparameteränderung (in obiger Formel gekennzeichnet z.B. als $\Delta_{z_0}^{v_c}$ ) von der Blechdicke D und einem zusätzlich einstellbaren Parameter bzw. Vorfaktor $\alpha_{z0}$ abhängig. Je nach Materialart und Materialqualität kann dieser Vorfaktor $\alpha_{z0}$ anders gewählt sein. Der Zusammenhang zwischen maximaler Schneidparameteränderung und der Blechdicke D kann aber auch nichtlinear sein, so dass beispielsweise folgende Formel angewendet werden kann:

$$\Delta_{z_0}^{v_c} = \alpha_{z0} * D^2 \, .$$

Die Laserleistung liegt typischerweise in einem Bereich zwischen 0 und ca. 30 kWatt. Der Gasdruck liegt beim Schmelzschneiden in einem Bereich zwischen 1 und 25 bar und beim Brennschneiden um die 0,5bar. Die Fokuslage kann in einem Bereich von -100 und +100 mm liegen und der Fokusdurchmesser liegt üblicherweise in einem Bereich zwischen 100 und 600 Mikrometer. Das BPP kann in einem Bereich zwischen 1 bis 5 mm*mrad liegen und der Düsenabstand kann z.B. 0.1mm bis mehrere Millimeter betragen. Die Korrekturwerte für den ersten Schneidparameterdatensatz sind so gewählt, dass der zweite Schneidparameterdatensatz (mit den angepassten oder korrigierten Schneidparametern) immer noch in diesen vorstehend genannten, vorkonfigurierbaren Zielbereichen liegt.

In einer weiteren bevorzugten Ausführungsform der Erfindung kann das Bewegungsprofilobjekt einen Wert für eine Geschwindigkeit, eine Beschleunigung und/oder einen Ruck für einen Punkt auf einer Schneidgeometrie indizieren und/oder einen Wert für eine Krümmung an einer Position der Schneidgeometrie oder einen Verlauf der vorstehend genannten Größen über die Zeit, z.B. als Geschwindigkeitsprofil Beschleunigungs- oder Ruckprofil über die Zeit.

Gemäß einer weiteren vorteilhaften Umsetzung der Erfindung kann der Umrechnungsalgorithmus für jeden der dynamischen Schneidparameter eine dedizierte Funktion aus einer Menge von in einem Speicher vorgehaltenen Funktionen berechnen.

In einer anderen vorteilhaften Ausführung kann die Menge von Funktionen (des Funktionskatalogs) parametrisierbar sein. Damit kann das Verfahren durch eine einfache Parametrierung einer Funktion ständig an neue Entwicklungen angepasst und stetig verbessert werden.

In einer anderen vorteilhaften Ausführung kann der bereitgestellte zweite Schneidparameterdatensatz direkt an einen Controller auf der Laserschneidmaschine zur Steuerung und/oder Regelung des Laserschneidprozesses übertragen werden. Damit wird der Automatisierungsgrad gesteigert.

In einer anderen vorteilhaften Ausführung ist es vorgesehen und kann es in einer Konfigurationsphase eingestellt werden, dass der Umrechnungsalgorithmus nur dann ausgeführt wird, wenn vorkonfigurierbare Änderungsbedingungen erfüllt sind. Die Änderungsbedingungen können beispielsweise durch Festlegung von Grenzwerten für ausgewählte Werte des Bewegungsprofilobjektes definiert werden (z.B., wenn die Sollgeschwindigkeit um den Wert x unter den Vorschubwert absinkt oder falls die Beschleunigung einen Wert y erreicht oder falls die Krümmung einen Wert z übersteigt etc.). Damit kann die Anpassungsfähigkeit des Verfahrens verbessert werden.

In einer anderen vorteilhaften Ausführung können in dem Umrechnungsalgorithmus lineare oder trigonometrische Funktionen implementiert sein.

In einer weiteren vorteilhaften Ausführung kann der Umrechnungsalgorithmus den zweiten Schneidparameterdatensatz dynamisch für jeden Punkt oder für Abschnitte einer (abzufahrenden) Trajektorie berechnen. Damit kann die Qualität auch bei unterschiedlichen Bewegungsmustern sichergestellt werden.

In einer weiteren vorteilhaften Ausführung kann ein Beschleunigungs- und/oder Ruckprofil, berechnet werden, das als Eingangsgröße für den Umrechnungsalgorithmus dient. Der vom Umrechnungsalgorithmus berechnete zweite Sollwertdatensatz ist ort- und zeitabhängig in Bezug auf die Trajektorie. Der zweite Sollwertdatensatz wird somit dynamisch für jede Position und jeden Zeitpunkt der Trajektorie erzeugt.

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf ein Laserschneidsystem oder auf eine Recheneinheit gerichtet sind) mit den Merkmalen weitergebildet sein, die in Zusammenhang mit dem Verfahren beschrieben oder beansprucht sind. Die entsprechenden funktionalen Merkmale des Verfahrens werden dabei durch entsprechende gegenständliche Module, insbesondere durch Hardware-Module oder Mikroprozessor-Module, des Systems bzw. eines Computerproduktes ausgebildet und umgekehrt.

Gemäß einem weiteren Aspekt betrifft die Erfindung eine elektronische Recheneinheit zur Ausführung eines Umrechnungsalgorithmus, mit:

- Einer Schnittstelle zum Erfassen von einem ersten Schneidparameterdatensatz (z.B. einer Benutzerschnittstelle);
- Einem Prozessor, der dazu ausgebildet ist, ein Bewegungsprofilobjekt zu extrahieren und der weiterhin ausgebildet ist, einen Umrechnungsalgorithmus auszuführen, der in einen Speicher der elektronischen Recheneinheit ladbar und/oder ausführbar gespeichert ist, um aus dem erfassten ersten Schneidparameterdatensatz den zweiten Schneidparameterdatensatz zu berechnen und bereitzustellen, wobei der zweite Schneidparameterdatensatz in Abhängigkeit von dem extrahierten Bewegungsprofilobjekt berechnet wird.

Die elektronische Recheneinheit kann zusätzlich noch eine Schnittstelle zum Einlesen des Schneidplans umfassen, aus dem z.B. der erste Schneidparameterdatensatz berechnet werden kann, der dann mittels des Umrechnungsalgorithmus validiert oder korrigiert wird.

Gemäß einem weiteren Aspekt betrifft die Erfindung ein Laserschneidsystem, mit:

- Einer elektronischen Recheneinheit, wie vorstehend beschrieben, die auf einem Controller implementiert sein kann und
- einer Laserschneidmaschine, die von dem Controller gesteuert und/oder geregelt wird.

Das Verfahren zur Berechnung von Korrekturen der Sollwerte zum Betreiben eines Laserschneidprozesses ist vorzugsweise Computer-implementiert. Alle oder ausgewählte Verfahrensschritte können durch ein oder mehrere Computerprogramm(e) auf einer oder mehreren Computereinheit(en) mit einem Prozessor (CPU, GPU etc.) ausgeführt werden. Das Verfahren kann ein Messen von Sensordaten (z.B. aktuell gemessener Vorschub) mittels geeigneter Sensoren unterschiedlicher Art (optisch, akustisch und/oder andere Sensorarten) umfassen. Je nach Typ der gemessenen Signale, kann ein A/D-Wandler zum Einsatz kommen, um die analogen Signale in digitale Signale umzuwandeln. Das Messen von Sensordaten kann somit auch ein Einlesen von digitalen Signalen umfassen.

Eine weitere Aufgabenlösung sieht ein Computerprogramm vor, mit Computerprogrammcode zur Durchführung aller Verfahrensschritte des oben näher beschriebenen Verfahrens, wenn das Computerprogramm auf einem Computer ausgeführt wird. Dabei ist es auch möglich, dass das Computerprogramm auf einem von einem Computer lesbaren Medium gespeichert ist.

**Kurze Beschreibung der Figuren:**

FIG.1    zeigt eine schematische Übersichtsdarstellung einer Laserschneidmaschine, die von einer Recheneinheit gesteuert wird;

FIG. 2    ist ein Ablaufdiagramm eines Verfahrens zur Berechnung des zweiten Schneidparametersatzes in unterschiedlichen Ausführungsformen;

FIG.3    ist eine schematische Darstellung einer Architektur gemäß einer ersten bevorzugten Ausführungsform der Erfindung und

FIG.4    ist eine schematische Darstellung einer alternativen Architektur gemäß einer zweiten bevorzugten Ausführungsform der Erfindung;

FIG: 5    zeigt an einem Beispiel eine linear von der Beschleunigung abhängige Korrektur der Fokuslage als Schneidparameter;

FIG. 6    zeigt an einem anderen Beispiel eine von der Beschleunigung abhängige Korrektur der Fokuslage als Schneidparameter mit einer Sinusfunktion als Basis und Exponent und

FIG. 7    zeigt an einem weiteren Beispiel eine geschwindigkeitsbasierte Korrektur des Gasdrucks als Schneidparameter;

FIG. 8a    ein Schneidergebnis ohne Korrektur der Schneidparameter gemäß Stand der Technik und

FIG. 8b    ein Schneidergebnis mit erfindungsgemäßer Korrektur der Schneidparameter durch Anwendung des Berechnungsverfahrens und

FIG. 9    eine graphische Darstellung der geschwindigkeitsabhängigen Änderung der Fokuslage an einem Beispiel.

**Beschreibung von vorteilhaften Ausführungsformen in Zusammenhang mit den Figuren**

Die Erfindung betrifft ein Computer-implementiertes Verfahren zur Korrektur von Schneidparametern für eine Lasermaschine L, die typischerweise mit einer Leistung über 2 KW betrieben wird. Sie kann insbesondere zum Schneiden von Metallblechen und -röhren eingesetzt werden.

Das erfindungsgemäße Verfahren implementiert einen intelligenten Umrechnungsalgorithmus zur Korrektur bzw. zur Anpassung von Schneidparametern zur Erhöhung der Qualität, insbesondere beim Schneiden von kleinen Radien und Ecken, in denen die Sollgeschwindigkeit des Laserschneidkopfes reduziert werden muss, damit eine ausreichende Schnittqualität gewährleistet werden kann.

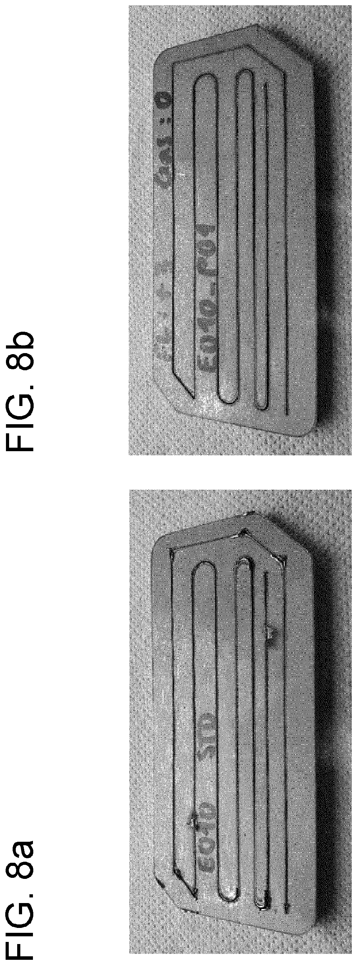

Der vorteilhafte technische Effekt des erfindungsgemäßen Verfahrens wurde in Versuchsreihen der Anmelderin getestet. So ist in **Figur 8A** ein Werkstück WS dargestellt, das mit nicht angepassten bzw. korrigierten Schneidparametern, insbesondere einem ersten Schneidparametern Datensatz 1SP, geschnitten worden ist. Wie in Figur 8A ersichtlich, weist der Schnitt in den Ecken und Radien sowie beim Anschnitt aufstehende Schmelzbereiche auf. Im Unterschied dazu, wurde in **Figur 8B** das erfindungsgemäße Verfahren angewendet und eine Korrektur der Schneidparameter wurde vorgenommen; das Werkstück WS wurde mit dem mittels eines Umrechnungsalgorithmus' berechneten zweiten Schneidparameterdatensatz 2SP geschnitten. Wie ersichtlich, ist die Qualität auch in den Ecken und Radien sowie bei An- und Endschnitt gut. Diese Qualität kann erfindungsgemäß bei gleichbleibender oder sogar verbesserter Performance (Zeit zum Schneiden der Teile) sichergestellt werden.

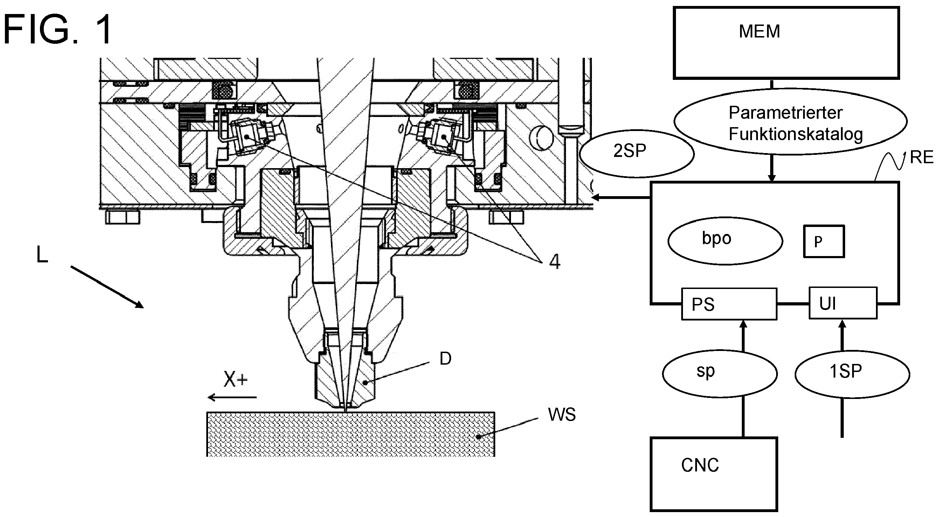

**Figur 1** zeigt eine Laserschneidmaschine L mit einer Düse D, die dazu ausgebildet ist, z.B. ein plattenförmiges Metallblech oder ein Metallrohr, auch Werkstück WS genannt, zu schneiden. Der spezifische Aufbau der Lasermaschine L ist für die Umsetzung der vorliegenden Erfindung nicht relevant. Üblicherweise können mehrere Sensoren, zum Beispiel in Form von Photodioden 4 in den Laserkopf integriert sein, um zum Beispiel Bilder vom Schnittspalt zu machen, um darauf basierend die Qualität des Schneidergebnisses beurteilen zu können. Die Lasermaschine L kann einen Controller C umfassen (in Figur 1 nicht dargestellt), der dazu ausgebildet ist, externe Anweisungen und - möglicherweise parametrierte - Instruktionen umzusetzen und den Laserschneidvorgang anzusteuern oder zu regeln. Im vorliegenden Fall kann eine Recheneinheit RE ausgebildet sein, um zumindest einen Teil der externen Anweisungen zu berechnen und bereitzustellen und an den Controller C zur Ausführung zu übermitteln. Die Recheneinheit RE ist eine elektronische Instanz, die als Knoten in einem Netzwerk bereitgestellt wird. Es kann sich um einen Bestandteil eines zum Beispiel Cloud-basierten Servers handeln. Die elektronische Recheneinheit RE (im Folgenden auch nur kurz Recheneinheit RE genannt) umfasst einen Prozessor P. Wie in Figur 1 näher dargestellt, umfasst die Recheneinheit RE einen Prozessor P zur Ausführung von Prozeduren, Funktionen und insbesondere eines Umrechnungsalgorithmus. Die Recheneinheit RE steht in Datenaustausch mit weiteren Instanzen. Insbesondere kann ein externer Speicher MEM vorgesehen sein, auf den die Recheneinheit RE zugreift, um Parameter zur Parametrisierung von Funktionen zur Anpassung der Schneidparameter sowie die jeweiligen Funktionen abzurufen. Die jeweiligen - vorzugsweise parametrierten - Funktionen werden dann auf der Recheneinheit RE geladen und stehen dort zur Ausführung bereit. Weiterhin ist die Recheneinheit RE ausgebildet, zusätzliche Datensätze zu empfangen. So kann die Recheneinheit RE eine Benutzerschnittstelle/User interface UI umfassen, auf dem der Anwender Eingaben tätigen kann. Auf der Benutzerschnittstelle UI kann zum Beispiel ein erster Schneidparameterdatensatz 1SP erfasst werden. Alternativ kann der erste Schneidparameterdatensatz 1DS zum Beispiel auch als Standardparameter Datensatz aus einem Speicher (z.B. tabellenartige Datenstruktur) ausgelesen werden. Die Recheneinheit RE kann darüber hinaus mit einer weiteren Steuereinheit CNC in Datenaustausch stehen, um insbesondere einen Schneidplan sp und/oder Schneidplan-bezogene Daten zu empfangen. ,Schneidplan-bezogene Daten' sind Daten, die entweder in dem Schneidplan sp enthalten sind oder aus selbigem deduziert werden können. Zu den Schneidplan-bezogenen Daten zählen beispielsweise der Vorschub, die Beschleunigung, Krümmungsverhältnisse der zu schneidenden Geometrie etc.

In einer ersten Variante der Erfindung, kann die Recheneinheit RE ausgebildet sein, aus den empfangenen Daten, insbesondere aus dem Schneidplan sp und gegebenenfalls standardisiert voreingestellten Schneidparametern, ein Bewegungsprofilobjekt bpo zu extrahieren bzw. zu berechnen. In dem Bewegungsprofilobjekt bpo kann ein Wert für die Geschwindigkeit, für die Beschleunigung und/ oder den Ruck (Ableitung über die Zeit) der Antriebsachsen des Laserkopfes für eine bestimmte Position auf der Geometrie (Umfang des zu schneidenden Teils) gespeichert sein. In dem Bewegungsprofilobjekt bpo kann kumulativ oder alternativ auch ein Wert für eine Krümmung für einen Punkt auf der Schneidgeometrie gespeichert sein. In einer Variante kann in dem Bewegungsprofilobjekt bpo auch ein Verlauf der genannten Größen (Geschwindigkeit, Beschleunigung, Ruck, Krümmung) über die Zeit gespeichert sein.

In einer zweiten Variante der Erfindung kann das Bewegungsprofilobjekt bpo bereits auf einer Recheneinheit-externen Instanz extrahiert worden sein, zum Beispiel auf der CNC Steuerung. In diesem Fall muss das Bewegungsprofilobjekt bpo nicht auf der Recheneinheit RE berechnet werden, sondern kann bereits in verarbeiteter Form über eine Schnittstelle eingelesen und direkt verarbeitet werden.

Die Recheneinheit RE kann nach dem Erfassen des ersten Schneidparameterdatensatzes 1SP und dem extrahierten Bewegungsprofilobjekt bpo unter Verwendung der Funktionen des parametrierten Funktionskatalogs den ersten Schneidparameterdatensatz 1SP mittels eines Umrechnungsalgorithmus' in den zweiten Schneidparameterdatensatz 2SP umrechnen. Der zweite Schneidparameterdatensatz 2SP fungiert sozusagen als modifizierter CNC-Code und wird direkt an den internen Controller C der Laserschneidmaschine L zur Ansteuerung der Laserschneidmaschine L (bzw. deren Achsen/Achsantriebe) übermittelt. Somit wird die Laserschneidmaschine L nicht - wie bisher - mit den Vorgaben der CNC Steuerung betrieben, sondern mit einem modifizierten Code, der korrigierte Einstellwerte umfasst, die in dem zweiten Schneidparameterdatensatz 2SP codiert sind.

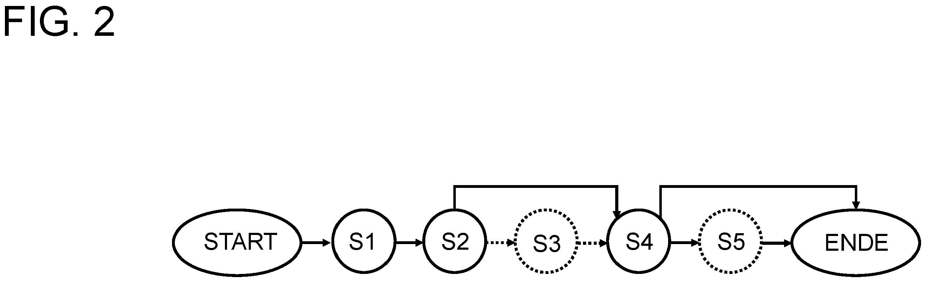

In **Figur 2** ist ein Ablauf des erfindungsgemäßen Berechnungsverfahrens in unterschiedlichen Ausführungsformen (in der Figur durch gepunktete Kreise repräsentiert) näher dargestellt. Nach dem Start des Verfahrens werden in Schritt S1 die Daten des ersten Schneidparameterdatensatzes 1SP erfasst. In Schritt S2 wird das Bewegungsprofilobjekt bpo extrahiert. In einer ersten Variante der Erfindung kann dann in Schritt S4 der Umrechnungsalgorithmus ausgeführt werden. Daraufhin kann das Verfahren beendet werden. In einer zweiten Variante der Erfindung kann optional in Schritt S3 eine Materialeigenschaft des zu schneidenden Materials erfasst werden. In diesem Verfahrensschritt kann beispielsweise spezifiziert werden, wie dick das zu schneidende Material (zum Beispiel Blech) ist und um welche Materialart (zum Beispiel Aluminium oder Stahl etc.) es sich handelt. Diese vorstehend genannten Größen für die Materialeigenschaft können daraufhin vom Umrechnungsalgorithmus zur Berechnung des zweiten Schneidparameterdatensatzes 2SP berücksichtigt werden. Damit kann der korrigierte bzw. angepasste Schneidparameterdatensatz, nämlich der zweite Schneidparameterdatensatz 2SP, noch besser auf den jeweiligen Anwendungsfall hin abgestimmt werden.

Grundsätzlich ist die Reihenfolge der Verfahrensschritte Erfassen des ersten Schneidparameterdatensatzes S1, Extrahieren S2 und Erfassen der Materialeigenschaft S3 nicht festgelegt und kann auch variiert werden, sodass die Verfahrensschritte in einer anderen Reihenfolge (zum Beispiel S2, S3, S1) oder sogar parallel ausgeführt werden können.

In einer bevorzugten Ausführungsform ist es vorgesehen, dass der berechnete zweite Schneidparameterdatensatz 2SP direkt und automatisch in Schritt S5 an den Controller C der Laserschneidmaschine L zur Steuerung und/oder Regelung übermittelt wird. Dieser Schritt ist jedoch optional und deshalb in Fig. 2 gepunktet dargestellt. In einer Variante der Erfindung kann es jedoch vorgesehen sein, dass der berechnete zweite Schneidparameterdatensatz 2SP einem Validierungsvorgang zugeführt wird, indem er auf einer Benutzerschnittstelle UI ausgegeben wird und bei Validierung ein Validierungssignal auf der Benutzerschnittstelle UI erfasst wird, das die Validierung des korrigierten Schneidparameterdatensatzes indiziert. In diesem Fall wird der zweite Schneidparameterdatensatz 2SP erst nach Erfassung des Validierungssignals an den Controller C übermittelt damit kann die Sicherheit des Korrekturverfahrens gesteigert werden.

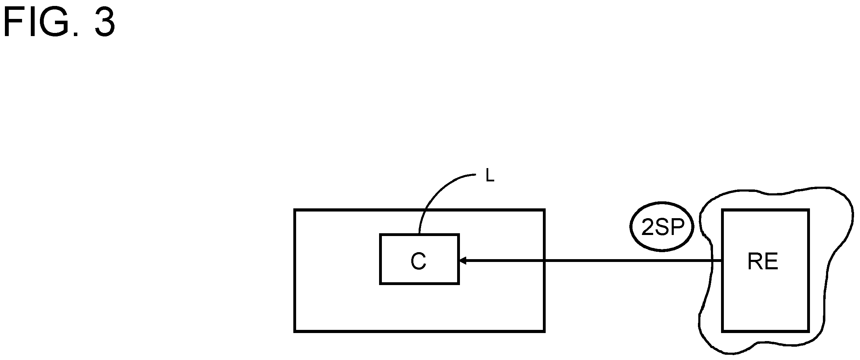

In **Figur 3** ist ein möglicher struktureller Aufbau des Laserschneidsystems gezeigt. In dieser Variante ist die elektronische Recheneinheit RE als externe Instanz über eine Datenverbindung an die Laserschneidmaschine L angeschlossenen. Die Recheneinheit RE kann zum Beispiel auf einem Cloud-basierten Server (in Figur 3 "Wolke") deployed sein, der über eine Internetverbindung mit der Laserschneidmaschine L verbunden ist. Insofern stimmt die in Figur drei gezeigte Ausführungsform mit der in Figur 1 näher beschriebenen über ein. Die elektronische Recheneinheit RE dient, wie beschrieben, zur Berechnung des zweiten Schneidparameterdatensatzes 2SP, der über die Datenverbindung direkt an den Controller C der Laserschneidmaschine L übertragen wird. In diesem Fall kann die Recheneinheit RE sozusagen zwischen der CNC Steuerung CNC und dem Lasermaschinen-internen Controller C implementiert sein. Alternativ ist es auch möglich, die Recheneinheit RE auf der Steuerung CNC zu implementieren.

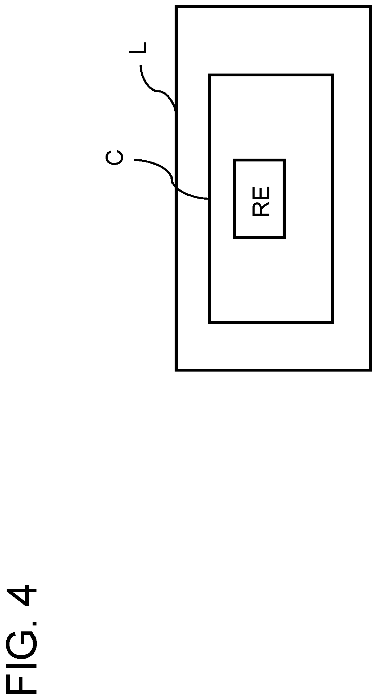

Im Vergleich zu Figur 3, ist in **Figur 4** eine alternative Ausführungsform dargestellt. In diesem Fall ist die Recheneinheit RE unmittelbar auf dem Controller C der Laserschneidmaschine L installiert. Die Recheneinheit RE und/oder der Controller C können fakultativ mit einer externen Steuerung CNC in Datenaustausch stehen, insbesondere um Steuerdaten zu empfangen. Wie vorstehend bereits erwähnt, basiert der Umrechnungsalgorithmus auf Funktionen des Funktionskatalogs. Die Funktionen können linear oder trigonometrisch sein. In anderen Ausführungsform der Erfindung können andere Funktionstypen gewählt werden. Beispielsweise kann der Umrechnungsalgorithmus die geschwindigkeitsabhängige Fokuslage mit einer Sinusfunktion als Basis und Exponent $\varepsilon_{z_0} = 2$ wie folgt ermitteln:

$$f^{z0}(x) = \Delta_{z_0}^{v_c} \sin\left(\frac{F - v_c}{F} 2\pi\right)^2 (v_c \leq F) \;\rightarrow\; z_0^* = z_0 + f^{z0}(x).$$

Für linear von der Beschleunigung abhängige Fokuslagen kann der Umrechnungsalgorithmus auf folgende Funktion des Funktionskatalogs zugreifen:

$$f^{z0}(x) = \Delta_{z_0}^{A} ((A_{max} - A_{min}) - \|A\|)(0 \leq \|A\|)(\|A\| \leq A_{max})(A_{min} \leq \|A\|) +$$

$$\Delta_{z_0}^{A}(A_{max} \leq \|A\|)(A_{min} \leq \|A\|) \quad \rightarrow z_0^* = z_0 + f^{z0}(x),$$

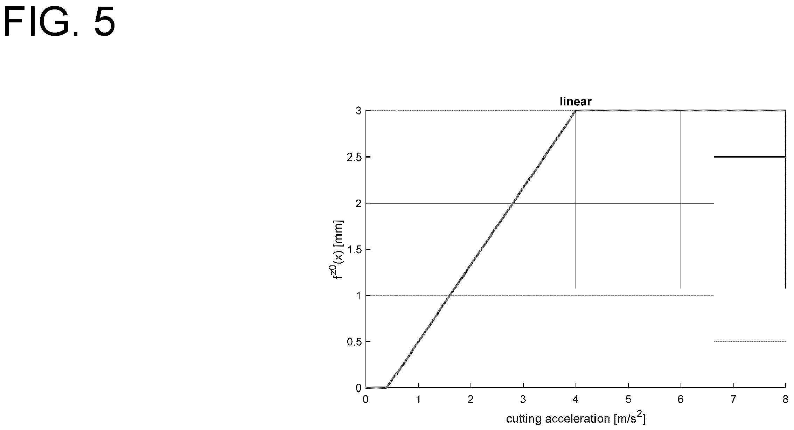

wobei $A_{max}$ die Beschleunigung ist, bis zu welcher die Änderungen angewendet werden sollen. Höhere Beschleunigungen führen zu keiner zusätzlichen Änderung. $A_{min}$ kennzeichnet die Beschleunigung, ab welcher die Änderungen angewendet werden sollen, wie in Fig. 5 dargestellt. Tiefere Beschleunigungen führen zu keiner zusätzlichen Änderung.

$$\text{Beispiel mit } A_{max} = 4\,\frac{m}{s^2} \text{ und } A_{min} = 0.4\,\frac{m}{s^2}.$$

Der lineare Zusammenhang wird exemplarisch in **Figur 5** graphisch dargestellt, wobei auf der Abszisse die Beschleunigung und auf der Ordinate die angepasste Fokuslage $f^{z0}(x)$ dargestellt ist.

Für die beschleunigungsabhängige Korrektur der Fokuslage kann der Umrechnungsalgorithmus z.B. mit einer Sinusfunktion als Basis und Exponent $\varepsilon_{z0}$ = 4 wie folgt berechnen:

$$f^{z0}(x) = \Delta_{z_0}^{A} \left(1 - \frac{sin(A_{max} - \|A\|)^4}{(A_{max} - A_{min})} \frac{\pi}{2}\right)(0 \leq \|A\|)(\|A\| \leq A_{max})(A_{min} \leq \|A\|) +$$

$$\Delta_{z_0}^{A}(A_{max} \leq \|A\|)(A_{min} \leq \|A\|) \rightarrow z_0^* = z_0 + f^{z0}(x).$$

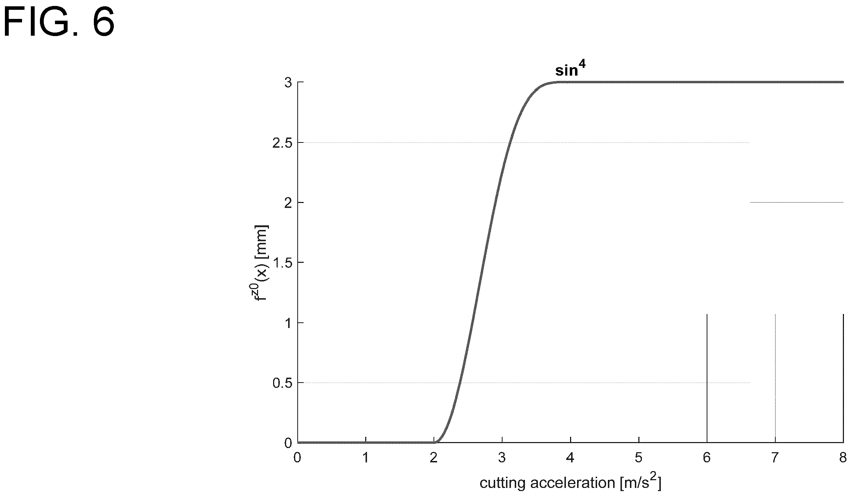

**Figur 6** zeigt exemplarisch ein Beispiel für die geschwindigkeitsbasierte Anpassung der Fokuslage $f^{z0}(x)$ mit $A_{max} = 4\frac{m}{s^2}$ und $A_{min} = 2\frac{m}{s^2}$. In diesem Beispiel wurde als Exponent der Sinusfunktion "4" gewählt, alternativ kann eine quadratische Sinusfunktion zur Anwendung kommen.

Für die geschwindigkeitsabhängige Gasdruckänderung kann der Umrechnungsalgorithmus z.B. mit einer Sinusfunktion als Basis und Exponent $\varepsilon_{p_H}$ = 3 wie folgt rechnen:

$$f^{p_H}(x) = \Delta_{p_H}^{v_c} \sin\left(\frac{F - v_c}{F} 2\pi\right)^3 (v_c \leq F) \rightarrow p_H^* = p_H + f^{p_H}(x).$$

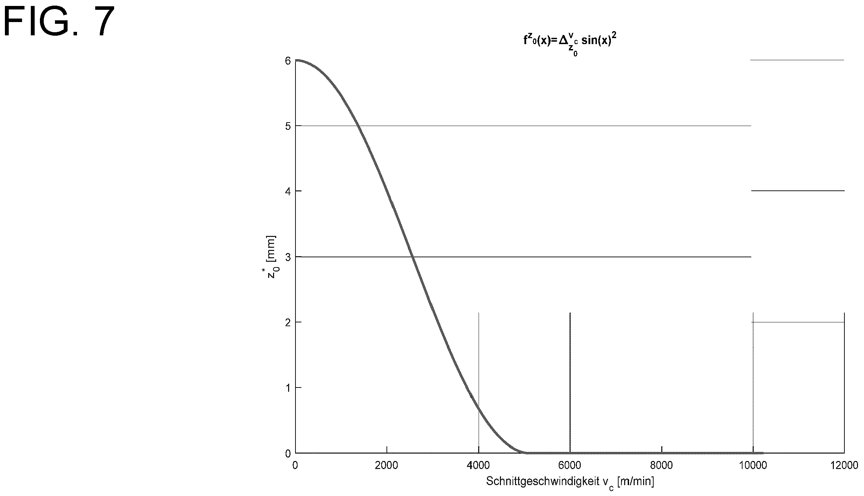

In **Figur 7** ist ein Beispiel graphisch dargestellt, wobei auf der Abszisse die Schnittgeschwindigkeit $v_c$ und auf der Ordinate die optimierte oder angepasste Fokuslage abhängig von der Schnittgeschwindigkeit aufgetragen ist.

Entsprechende Graphen ergeben sich bei einer Anpassung des Gasdrucks in Abhängigkeit von der Beschleunigung oder der Geschwindigkeit mittels des Umrechnungsalgorithmus.

In weiteren Ausführungsformen der Erfindung können komplexere Funktionen und Kombinationen von geschwindigkeits-, beschleunigungs- und krümmungsabhängigen Anpassungen angewendet werden:

$$f^{z0}(x) = \Delta_{z_0}^{v_c} \sin\left(\frac{F - v_c}{F} 2\pi\right)^2 (v_c \leq F) + \Delta_{z_0}^{\kappa} \sin\left(\frac{F - v_c}{F} 2\pi\right)^{12} (\kappa \geq \kappa_{min}),$$

wobei der Krümmungsradius aus dem Schneidplan sp ausgelesen werden kann. Der Exponent ist hier beispielhaft mit "2" und "12" angegeben. Grundsätzlich können die Exponenten der Funktionen je nach Material und je nach Parameterabhängigkeit unterschiedliche eingestellt werden. Der Exponent ist deshalb vorzugsweise parametrierbar.

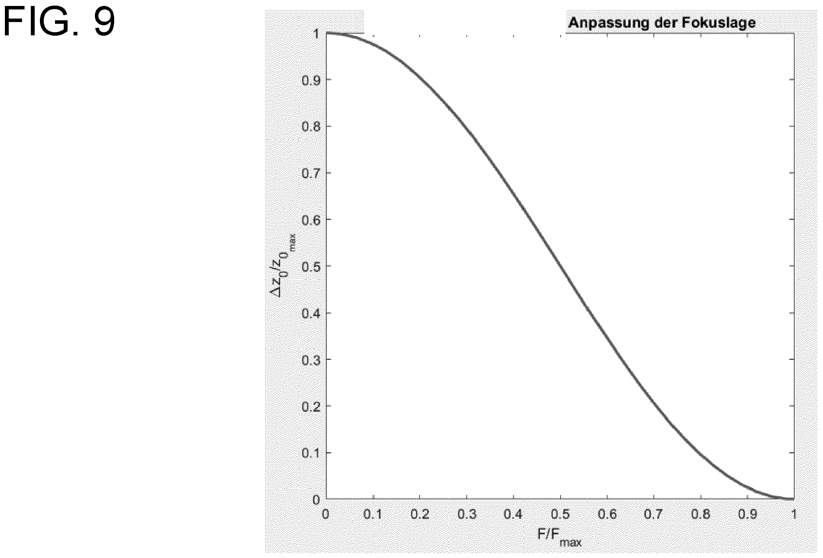

**Fig. 9** zeigt nochmals in welchen Situationen eine Anpassung bzw. Korrektur der Schneidparameter am Beispiel der Fokuslage (stellvertretend auch für die anderen dynamischen Schneidparameter) vorgenommen werden soll. Der Umrechnungsalgorithmus kann vorzugsweise material- und blechdickenabhängig skalieren. Fig. 9 zeigt, dass die Fokuslage maximal korrigiert wird, wenn das Verhältnis des aktuellen Vorschubs zum Maximalvorschub null oder sehr gering ist, wenn also ein Trajektorieabschnitt deutlich langsamer gefahren werden kann als maximal, durch den Vorschub bedingt, möglich. Entspricht die Schnittgeschwindigkeit $v_c$ dem Maximalvorschub $v_c$ = $F_{max}$, dann wird die Fokuslage nicht angepasst, d.h. $\Delta z 0 /z 0$ max ist null.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die nachstehenden Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Einstellungen von bestimmten Prozessparametern, wie z.B. der Fokuslage, angewendet werden kann, sondern auch für andere Prozessparameter, wie z.B. zur Anpassung oder Korrektur des Gasdrucks. Des Weiteren können die Bauteile der Vorrichtung bzw. Recheneinheit auf mehrere physikalische Produkte verteilt realisiert sein.

## Patentansprüche

1.  Verfahren zur Berechnung eines zweiten Schneidparameterdatensatzes (2SP) zur Steuerung und/oder Regelung eines Laserschneidprozesses einer Laserschneidmaschine (L) während des Laserschneidens von Bauteilen (WS), mit folgenden Verfahrensschritten, die auf einer elektronische Recheneinheit (RE) ausgeführt werden:

- Erfassen (S1) eines ersten Schneidparameterdatensatzes (1SP);
- Extrahieren (S2) eines Bewegungsprofilobjektes (bpo);
- Ausführen (S4) eines Umrechnungsalgorithmus, der in einem Speicher der elektronischen Recheneinheit ladbar und/oder ausführbar gespeichert ist, um aus dem erfassten ersten Schneidparameterdatensatz (1SP) den zweiten Schneidparameterdatensatz (2SP) zu berechnen und bereitzustellen, wobei der zweite Schneidparameterdatensatz (2SP) in Abhängigkeit von dem extrahierten Bewegungsprofilobjekt (bpo) berechnet wird.

2.  Verfahren nach Anspruch 1, wobei das Verfahren weiterhin umfasst:

- Erfassen (S3) einer Materialeigenschaft des zu schneidenden Bauteils (WS), insbesondere einer Blechdicke und/oder einer Materialart;
- wobei der Umrechnungsalgorithmus zur Berechnung des zweiten Schneidparameterdatensatzes die erfasste Materialeigenschaft, insbesondere die Blechdicke und/oder die Materialart berücksichtigt.

3.  Verfahren nach einem der vorangehenden Ansprüche, bei dem der erste Schneidparameterdatensatz (1SP) und/oder zweite Schneidparameterdatensatz (2SP) dynamische Schneidparameter umfasst, nämlich insbesondere Schnittgeschwindigkeit, Fokuslage, Pulsschema, Düsenabstand, Gasdruck, Laserleistung, Beam Parameter Product / BPP und/oder Fokusdurchmesser.

4.  Verfahren nach einem der vorangehenden Ansprüche, bei dem das Bewegungsprofilobjekt (bpo) einen Wert für eine Geschwindigkeit, eine Beschleunigung und/oder einen Ruck und/oder eine Krümmung für einen Punkt auf einer Schneidgeometrie indiziert oder einen Verlauf der vorstehend genannten Größen über die Zeit.

5.  Verfahren nach dem unmittelbar vorangehenden Anspruch, bei dem der Umrechnungsalgorithmus für jeden der dynamischen Schneidparameter eine dedizierte Funktion aus einer Menge von in einem Speicher (MEM) vorgehaltenen Funktionen berechnet.

6.  Verfahren nach dem unmittelbar vorangehenden Anspruch, bei dem die Menge von Funktionen parametrisierbar ist.

7.  Verfahren nach einem der vorangehenden Ansprüche, bei dem der bereitgestellte zweite Schneidparameterdatensatz (2SP) direkt an einen Controller (C) auf der Laserschneidmaschine (L) zur Steuerung und/oder Regelung des Laserschneidprozesses übertragen wird.

8.  Verfahren nach einem der vorangehenden Ansprüche, bei dem der Umrechnungsalgorithmus nur dann ausgeführt wird, wenn vorkonfigurierbare Änderungsbedingungen erfüllt sind, insbesondere wenn das Bewegungsprofilobjekt (bpo) vorbestimmte Grenzwerte über- oder unterschreitet.

9.  Verfahren nach einem der vorangehenden Ansprüche, bei dem der Umrechnungsalgorithmus als eine lineare oder trigonometrische Funktion implementiert ist.

10. Verfahren nach einem der vorangehenden Ansprüche, bei dem der Umrechnungsalgorithmus den zweiten Schneidparameterdatensatz (2SP) dynamisch für jeden Punkt oder für Abschnitte einer Trajektorie berechnet.

11. Verfahren nach einem der vorangehenden Ansprüche, bei dem ein Beschleunigungs- und/oder Ruckprofil berechnet wird, das als Eingangsgröße in dem Umrechnungsalgorithmus dient.

12. Computerprogramm mit Computerprogrammcode zur Durchführung aller Verfahrensschritte des vorangehend beanspruchten Verfahrens, wenn das Computerprogramm auf einem Computer, einer elektronischen Instanz und/oder einer Recheneinheit (RE) ausgeführt wird.

13. Elektronische Recheneinheit (RE) zur Ausführung eines Umrechnungsalgorithmus, mit:

- Einer Schnittstelle (UI) zum Erfassen von einem ersten Schneidparameterdatensatz (1SP);
- Einem Prozessor (P), der dazu ausgebildet ist, ein Bewegungsprofilobjekt (bpo) zu extrahieren und der weiterhin ausgebildet ist, einen Umrechnungsalgorithmus auszuführen, der in einem Speicher der elektronischen Recheneinheit (RE) ladbar und/oder ausführbar gespeichert ist, um aus dem erfassten ersten Schneidparameterdatensatz (1SP) den zweiten Schneidparameterdatensatz (2SP) zu berechnen und bereitzustellen, wobei der zweite Schneidparameterdatensatz (2SP) in Abhängigkeit von dem extrahierten Bewegungsprofilobjekt (bpo) berechnet wird.

14. Laserschneidsystem, mit:

   - Einer elektronischen Recheneinheit (RE) nach dem vorangehenden Anspruch und
   - Einer Laserschneidmaschine (L), die von einem Controller (C, RE) gesteuert und/oder geregelt wird.

15. Laserschneidsystem nach einem der vorangehenden Systemansprüche, wobei die elektronische Recheneinheit (RE) auf dem Controller (C) implementiert ist.

FIG. 1

MEM

Parametrierter
Funktionskatalog

2SP

RE

bpo    P

PS    UI

sp    1SP

CNC

L

X+

D

WS

4

EP 3 984 688 A1

EP 3 984 688 A1

# FIG. 2

START → S1 → S2 ⋯→ S3 ⋯→ S4 → S5 → ENDE

FIG. 3

RE

2SP

L

C

FIG. 4

FIG. 5

FIG. 6

EP 3 984 688 A1

# FIG. 7

FIG. 8b

FIG. 8a

FIG. 9

Anpassung der Fokuslage

EP 3 984 688 A1

**Europäisches Patentamt**
**European Patent Office**
**Office européen des brevets**

# EUROPÄISCHER RECHERCHENBERICHT

Nummer der Anmeldung

EP 20 20 2245

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2018 216873 A1 (TRUMPF WERKZEUGMASCHINEN GMBH CO KG) 2. April 2020 (2020-04-02) * Absätze [0032] - [0035]; Ansprüche; Abbildungen * | 1-15 | INV. B23K26/062 B23K26/38 B23K26/70 |
| | ----- | | ADD. |
| Y | US 2019/375051 A1 (B. REGAARD ET AL) 12. Dezember 2019 (2019-12-12) * Absätze [0049] - [0071], [0128] - [0142]; Ansprüche; Abbildungen * | 1-15 | B23K101/04 B23K101/18 |
| | ----- | | |
| A | US 2017/275197 A1 (A. S. ALTMAN ET AL) 28. September 2017 (2017-09-28) * Absätze [0056], [0066]; Ansprüche; Abbildungen * | 1-15 | |
| | ----- | | |
| A,D | EP 2 883 647 B1 (BYSTRONIC LASER AG) 29. Mai 2019 (2019-05-29) * Zusammenfassung; Ansprüche; Abbildungen * | 1,12,13 | |
| | ----- | | |

RECHERCHIERTE SACHGEBIETE (IPC)

B23K

Der vorliegende Recherchenbericht wurde für alle Patentansprüche erstellt

| Recherchenort | Abschlußdatum der Recherche | Prüfer |
|---|---|---|
| München | 31. März 2021 | Jeggy, Thierry |

**ANHANG ZUM EUROPÄISCHEN RECHERCHENBERICHT
ÜBER DIE EUROPÄISCHE PATENTANMELDUNG NR.**

EP 20 20 2245

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-03-2021

| Im Recherchenbericht angeführtes Patentdokument | Datum der Veröffentlichung | Mitglied(er) der Patentfamilie | Datum der Veröffentlichung |
|---|---|---|---|
| DE 102018216873 A1 | 02-04-2020 | DE 102018216873 A1<br>WO 2020069889 A1 | 02-04-2020<br>09-04-2020 |
| US 2019375051 A1 | 12-12-2019 | KEINE | |
| US 2017275197 A1 | 28-09-2017 | CN 106573819 A<br>EP 3183222 A1<br>JP 2017532274 A<br>JP 2020152638 A<br>KR 20170043587 A<br>TW 201612121 A<br>US 2017275197 A1<br>WO 2016028580 A1 | 19-04-2017<br>28-06-2017<br>02-11-2017<br>24-09-2020<br>21-04-2017<br>01-04-2016<br>28-09-2017<br>25-02-2016 |
| EP 2883647 B1 | 29-05-2019 | CN 104907700 A<br>EP 2883647 A1<br>US 2015165549 A1 | 16-09-2015<br>17-06-2015<br>18-06-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2883647 B1